(19) Europäisches Patentamt
European Patent Office
Office européen des brevets

(11) Publication number: 0 191 213 A2

(12) # EUROPEAN PATENT APPLICATION

(21) Application number: 85303097.1

(22) Date of filing: 01.05.85

(51) Int. Cl.⁴: C 08 G 73/14, C 09 D 3/70, C 09 J 3/16, C 07 D 207/404, C 07 D 209/48

(30) Priority: 17.12.84 US 682547

(43) Date of publication of application: 20.08.86 Bulletin 86/34

(84) Designated Contracting States: AT BE CH DE FR GB IT LI LU NL SE

(71) Applicant: Gagliani, John, 6280 Lance Place, San Diego California 92120 (US)
Applicant: Long, John V., 1756 E. Lexington Avenue, El Cajon California 92121 (US)

(72) Inventor: Gagliani, John, 6280 Lance Place, San Diego California 92120 (US)
Inventor: Long, John V., 1756 E. Lexington Avenue, El Cajon California 92121 (US)

(74) Representative: Spencer, Graham Easdale et al, A.A. Thornton & CO Northumberland House 303-306, High Holborn, London WC1V 7LE (GB)

(54) **Method of making imide precursor compositions for polyimide coatings and adhesives.**

(57) A method of making an imide resin composition comprises:

(a) mixing at least one lactam and/or amino acid (component A) with at least one aromatic dianhydride (component B) in a mole ratio of A:B of up to 10:1,

(b) mixing a solvent with the mixture from step (a) and heating the resulting mixture, and

(c) mixing at least one diamine (component C) with the product of step (b) to give a solution of the imide precursor which forms a polyimide upon heating.

EP 0 191 213 A2

Method of making imide precursor compositions for polyimide coatings and adhesives.

The present invention is concerned with polyimide coatings and adhesives and, more particularly, with methods and compositions for producing imide precursors and polyimides for use as adhesives and coatings.

A number of different imide-based coating and adhesive compositions have been described in prior patents, such as those described in U.S. Patents 4161477, 4183838, and 4183139. These known polyimide-forming compositions and methods give polyimide coatings and adhesives suitable for some applications, but a number of problems limit the usefulness of such polyimides.

The coating compositions of the prior art often do not adhere well to both metallic and non-metallic surfaces especially when fillers are used, and the adhesive compositions often have low peel strength, especially at elevated temperatures. Furthermore, the starting materials of the known compositions require high reaction temperatures and/or long periods at elevated temperatures to produce the imide precursors and special vessels or reactors suitable for this purpose are very costly and the processes are time consuming. Thus there is a need for improved polyimide coatings and adhesives and for improved processes for

making such compositions.

We have now developed a method for the production of imide precursor compositions and polyimide coatings and adhesives which reduces or avoids the problems of the prior art mentioned above. The present invention provides a method of making imide precursors which uses relatively low temperatures and short heating periods, and gives polyimide coatings and adhesives having superior physical properties including freedom from pinholes, bubbles and similar defects, high peel resistance and resistance to abrasion and high temperatures. Furthermore, the polyimide-forming compositions of the present invention have improved shelf lives, adhere well to a variety of metallic and non-metallic substrates and to shape edges, and can be applied using a variety of solvents and conventional coating techniques.

According to the present invention, therefore, there is provided a method of making an imide precursor composition, which comprises:

(a) mixing at least one lactam and/or amino acid (component A) with at least one aromatic dianhydride (component B) in a mole ratio of A:B of up to 10:1,

(b) mixing a solvent with the mixture from step (a) and heating the resulting mixture, and

(c) mixing at least one diamine (component C) with the product of step (b) to give a solution of the imide precursor which forms a polyimide upon heating.

The preferred method according to the present invention comprises mixing at least one lactam and/or amino acid and a dianhydride in a suitable solvent, maintaining the mixture at a temperature of from 30°C to 120°C and stirring until solution is complete (about 30 to 120 minutes), cooling the solution to a

temperature of about 20°C to 60°C, then adding a suitable diamine (or mixture of diamines) and stirring until solution is complete (about 30 to 60 minutes). As already stated, the mole ratio of lactam and/or amino acid to dianhydride is up to 10:1. With more than 10 moles of lactam and/or amino acid per mole of dianhydride, the compositions obtained do not have good adhesion characteristics; this is primarily caused by free amino acid liberated during the high temperature curing reaction. However, mole ratios of lactam and/or amino acid to dianhydride of up to 10:1 produce compositions which avoid this deficiency and give superior characteristics as adhesives. The resulting imide precursors can be stored as solutions or can be dried to powders.

For best results, the mixture of lactam and/or amino acid and dianhydride is initially held at a temperature of from 90° to 100°C, followed by cooling to a temperature of 40° to 50°C.

The solution (or powder or powder redissolved in any suitable solvent) may be coated on to a substrate by any suitable method and is then heated to a temperature of from 175° to 320°C for a period of 30 minutes to 5 hours, depending upon the temperature employed, to convert the imide precursor to high molecular weight polyimide. When used as an adhesive, the precursor composition is pressed with moderate pressure between the surfaces to be bonded whilst curing is taking place.

Typical curing conditions are 5 hours at 177°C, 3 hours at 232°C, 2 hours at 260°C or 30 minutes at 316°C. If desired, staged curing temperatures can advantageously be employed, especially in laminating applications. A preferred curing cycle of this character is 2 hours at 149°C, 3 hours at 204°C, and

1 hour at 316°C.

Preferred lactams for use in the method of the invention are those of the formula:

$$H_2C-(CH_2)_x-NHCO$$

where x is an integer of from 2 to 7. Lactams in which x = 2, 3, or 4 (i.e. 2-pyrrolidone, 2-piperidone, or caprolactam respectively) are particularly preferred and, of these, caprolactam is the most preferred.

Preferred aminoacids are those derived from the three preferred lactams, namely 6-aminocaproic acid, 5-aminovaleric acid, and 4-aminobutyric acid. The preferred lactams and amino acids may each be used alone or two or more of them may be combined in any suitable mixture.

A wide variety of dianhydrides can be used in the method of the present invention. Suitable dianhydrides include those disclosed in U.S. Patents 3282897 and 3310506.

Preferred dianhydrides for use in the method of the invention are pyromellitic dianhydride and/or 3,3',4,4'-benzophenone tetracarboxylic acid dianhydride (BTDA). The preference for these two dianhydrides is based principally upon their availability in commerical quantities at reasonable prices.

A variety of aromatic diamines, aromatic diamines with aliphatic groups in the molecule, and aliphatic diamines may be used in preparing the imide precursors of the present invention. For high temperature applications, aliphatic diamines are avoided because the aliphatic moiety may have an adverse effect on thermal stability.

Suitable diamines for use in the method of the invention include, for example, _m_-phenylenediamine,

*p*-phenylenediamine, 4,4'-diaminodiphenyl ether, 4,4'-diaminodiphenyl sulfone, 3,3'-diaminodiphenyl sulfone, 4,4'-diaminodiphenylmethane, and 3,3'-diaminodiphenylmethane, and mixtures of two or more thereof.

Other suitable diamines which may be employed alone and in various mixtures are disclosed in U.S. Patents 3282897, 3310506, and 3391120; they include 1,3-diaminopropane, 1,4-diaminobutane, 1,6-diaminohexane, 1,8-diaminooctane, 1,12-diaminododecane, and mixtures of two or more thereof. While all of the diamine components used may be aliphatic, it is preferred that at least 50mol % of the diamine component should be aromatic.

Any suitable mixture of polar or non-polar solvents may be used in the method of the invention. The solvent may be aliphatic or aromatic and may include amino or halogen substituents. Solvents which are preferred because of their relatively low cost, wide availability, low boiling points, and minimal undesirable properties include aliphatic and aromatic alcohols, N,N-dialkylcarboxyamides, ketones, and mixtures of two or more thereof.

Any suitable quantity of solvent may be used, but the preferred mol ratio of solvent to dianhydride is from 5:1 to 10:1. The quantity of solvent should preferably be sufficient to produce a final resin having a solids content of between 10 and 60% by weight. Excess solvent tends to produce low viscosity resins which tend to drip when coated, while insufficient solvent results in very viscous liquids which are difficult to use. If required, additional solvent can be added after completion of the imide-forming reaction to reduce the viscosity of the composition.

If desired, the solvent can be evaporated

from the solution of the imide precursor using spray drying or other conventional techniques to give a solid product. This is not necessary, however, as the solutions are stable at room temperature and can be stored indefinitely. The solid product can be redissolved in any suitable solvent.

The solutions of the invention can be applied to a variety of suitable substrates. Typical substrates include stainless steels, aluminium, titanium, copper, steel and other metals, glasses, plastics, and substrates with complicated geometrical configurations. The solution may be applied by conventional and relatively inexpensive techniques such as dip or spray coating.

The coating compositions of the invention are preferably applied at a thickness of not more than 3 mm for a single application. Thicker single applications may result in pinholes and other flaws in the final coating. Thicker coatings can, however, readily be produced by building up the coating thickness in two or more applications.

A second lamina can be bonded to the coated substrate by pressing the surfaces of the two laminae together and heating the assembly at a temperature of as low as 170°C at a pressure of as low as 345kPa for approximately one second.

The adhesion characteristics of the coating or adhesive can be improved by the use of selected additives and/or adhesion promoters. Preferred adhesion promoters are the products obtained from the reaction between an aromatic acid dianhydride and an alkoxysilane with a terminal primary amino group. Preferred dianhydrides are 3,3',4,4'-benzophenonetetracarboxylic acid dianhydride and pyromellitic dianhydride; a preferred silane is aminopropyltriethoxysilane. However, other dianhydrides can be employed, including those disclosed in the patents mentioned above. Similarly, other silanes having terminal primary amino groups may be used.

These adhesion promoters may be used in any suitable amounts. Preferred amounts give a mol ratio of adhesion promoter to diamine component of less than or equal to 0.1:1.0 in the final composition. Higher proportions of the adhesion promoter produce greater adhesion, but may cause brittleness and are accordingly generally used only in applications where more brittle coatings can be tolerated.

The coating and adhesive compositions of the present invention possess an outstanding degree of wettability. As a consequence, a virtually limitless variety of organic and inorganic fillers may be added to the composition to promote desirable characteristics in the polymer and/or to provide it with additional desirable characteristics. Preferred fillers include fluorinated hydrocarbons (e.g. Teflon® ), powdered aluminium, copper, steel, chromium oxide, aluminium phosphate, aluminium chromate, powdered glass, magnesium phosphate, and mixtures of two or more thereof.

The filler may be added by any suitable conventional means. Typically it may simply be milled into the imide precursor in a ball mill at room temperature until the mixture becomes homogeneous.

The amount of filler added to a particular composition will of course vary according to the application and will depend upon the nature of the filler, the purpose for which it is incorporated, and other factors. A weight ratio of filler to resin of as high as 2.5:1 can be employed without resin starvation and consequent formation of a soft andporous coating, but a 1:1 ratio tends to give the best results. Higher

ratios can be employed in applications where a resin starved composition is required or acceptable, but such compositions are not employed to any great extent in the applications for which the compositions of the invention are best suited.

A particularly preferred filler is a mixture of from 8 to 20 parts of aluminium hydroxide, from 15 to 50 parts of magnesium oxide, and from 150 to 300 parts of phosphoric acid, which is used in a weight ratio of filler to resin of 1:1. This filler imparts outstanding high temperature resistance to the final coating or adhesive.

Any suitable flow control agents and wetting agents can also be added to the resin to improve the properties of the resulting coating or adhesive.

Furthermore, the compositions of the present invention possess good solubility and can therefore be applied by a wide variety of coating techniques. Also, as mentioned above, the coatings of the invention can be applied to sharp edges and to complex shapes. This is due primarily to their good wettability and adhesion.

In order that the invention may be more fully understood, the following examples are given by way of illustration only.

Example 1

3,3',4,4'-Benzophenonetetracarboxylic acid dianhydride (BTDA) (322 g, 1.0 mole), N,N-dimethylformamide (500 g) and caprolactam (30 g, 0.265 mole) were placed in a two-litre flask and the mixture heated to a temperature of between 30° and 120°C and maintained at that temperature for 60 minutes. 4,4'-Diaminodiphenyl ether (200 g, 1.0 mole) was then added and the mixture stirred for 10 minutes at 55°C to produce a viscous liquid. A mixture (800 g) consisting of equal parts by weight of acetone, methylisobutyl ketone, and

N,N-dimethylacetamide was then added and the mixture stirred at 40°C for 1 hour to give an homogenous solution.

The resulting product was useful as a coating and adhesive, as exemplified below, and possessed an indefinite shelf life.

Example 2

The composition of Example 1 was sprayed on to 410 stainless steel panels using a De Vilbiss spray gun with an F fluid tip at an air pressure of 50 psi. The coating was dried at 120°C for 10 minutes, evaporating the carrier and producing a tough, hard, abrasion resistance coating having a thickness of about 3 mm. The coating was found to have excellent coating continuity. Thereafter, the coating was cured at a temperature of 316°C for 30 minutes to effect the imide reactions. The coating became even harder and was found to be resistant to solvents, oils, acids, and salt sprays and to elevated temperatures.

Example 3

The composition of Example 1 was sprayed on to two aluminium panels. The resin was dried at 120°C for 10 minutes, evaporating the carrier and producing a hard coating. The coated surfaces of the two aluminium panels were pressed together and the assembly placed in a press preheated to 220°C; 689kPa pressure was then applied. The aluminium panels were kept under these conditions for 30 minutes. After cooling, the sample was removed from the press and found to be well bonded. The bonded panel was then post cured at 260°C for one to five hours in an electrically heated oven. The shear strength of the adhesive layer was greater than 6895kPa.

Example 4

To demonstrate the usefulness of fillers in

the polyimide coating compositions of the invention, 13 parts by weight of aluminium hydroxide, 30 parts by weight of magnesium oxide, and 240 parts by weight of phosphoric acid were mixed at 100°C. Seventy parts by weight of N,N-dimethylformamide were then milled into this mixture and the resulting mixture was blended with 400 parts by weight of the resin produced according to the method of Example 1.

The composition obtained was spray coated on to a stainless steel panel using the method described in Example 2. The coating was cured at 316°C for 30 minutes to effect the imide reactions and produce a polyimide of the formula:

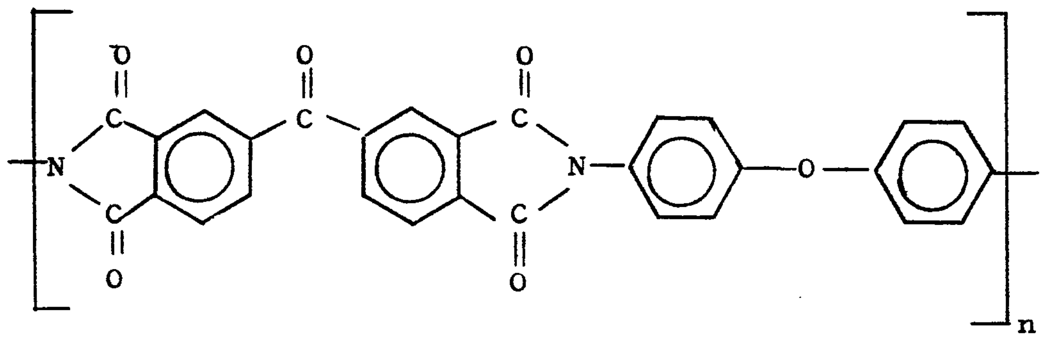

where n is a positive integer.

The coating was found to be resistant to sustained temperatures of 320°C periodically increased to temperatures as high as 540°C.

<u>Example 5</u>

The procedure described in Example 4 was repeated using as an additive or filler a composition containing 30 parts by weight of the filler mixture described in Example 4, 70 parts by weight of N,N-dimethylacetamide, and 30 parts by weight of finely pulverised aluminium powder. This mixture was blended with 400 parts by weight of the resin of Example 1 and

the product was coated on to a stainless steel panel and cured according to the procedure described in Example 2.

The cured coating was hard and resistant to temperatures as high as 320°C periodically increased to 540°C.

Example 6

To demonstrate how thicker coatings can be produced than that obtained from the single application described in Example 2, the procedure was repeated three times applying three 1-2 mm coatings of the Example 1 formulation and drying the coating at 95°C in an air circulating oven after each application. After the third application had dried, the coating was cured for 1 hour at 149°C, 2 hours at 232°C, 30 minutes at 260°C and 30 minutes at 316°C. A fully cured, homogenous coating was obtained.

Example 7

In order to demonstrate that other aromatic diamines can be used to form the imide precursors of the invention, the method described in Example 1 was repeated using 248 g (1.0 mole) of 4,4'-diaminodiphenyl sulfone in place of the 4,4'-diaminophenyl ether. The final resin solution or coating composition was stable at room temperature and yielded excellent light coloured coatings.

Example 8

The suitability of a diamine mixture instead of a single diamine for preparing the imide precursors of the invention is demonstrated by repeating the method described in Example 1 using a mixture of 4,4'-diaminodiphenylmethane (99.1 g, 0.5 mole) and p-phenylene diamine (59 g, 0.5 mole) in place of the 4,4'-diaminophenyl ether.

The final resin or coating solution was stable

at room temperature and produced coatings which possessed outstanding abrasion resistance.

Example 9

To demonstrate how wetting and flow control agents may be employed and that other aromatic anhydrides than BTDA can be used in making the imide precursors of the invention, a sample was prepared as follows: pyromellitic dianhydride (218.12 g, 1.0 mole), N,N-dimethylacetamide (500 g), and caprolactam (304 g, 2.7 mole) were mixed in a two-litre flask and heated to a selected temperature of between 30°C and 120°C for 60 minutes, then cooled to 50°C. 4,4'-Diaminodiphenylmethane (198.2 g, 1.0 mole) was then added and the mixture stirred for 10 minutes at 50°C. A mixture (800 g) consisting of equal parts by weight of acetone, methylisobutyl ketone, ethyl alcohol, and N,N-dimethylacetamide was added to the resulting viscous liquid and the mixture stirred at 30°C for 1 hour. General Electric SR-82 flow control agent (1.5 g) was added to the mixture and stirring continued for an additional 30 minutes to complete the process.

The final coating resin was found to produce a useful coating when cured at 200°C for 1 hour.

Example 10

To demonstrate the use of an adhesion promoter, an imide precursor was first prepared by the following method: caprolactam (45.2 g, 0.4 mole), N,N-dimethylacetamide (200 g) and BTDA (161 g, 0.5 mole) were mixed in a two-litre flask, heated to a temperature of 90°C for 60 minutes, then cooled to 50°C. 4,4'-Diaminodiphenyl sulfone (37.2 g, 0.15 mole), 10.8 g (0.005 mole) of the adhesion promoter, and BTDA (30.6 g, 0.095 mole) were then added and the mixture stirred for 1 hour at 50°C. The resulting composition was a dark viscous liquid which remained stable for several months

and was useful as a coating.

Example 11

The method of Example 1 was repeated using 6-aminocaproic acid (34.7 g, 0.265 mole) in place of caprolactam. The resulting resins were found to be very satisfactory as adhesive compositions.

Example 12

The method of Example 1 was repeated using 2-pyrrolidone (0.265 mole) and 2-piperidone in place of caprolactam. The coatings in each case were excellent and had excellent storage stability.

Example 13

To demonstrate that aliphatic diamines may be used to prepare the imide precursor compositions of the invention, the following composition was prepared by the method of Example 9 using 3,3',4,4'-benzophenonetetracarboxylic acid dianhydride (322.2 g, 1.0 mole), 1,6-diaminohexane (116.2 g, 1.0 mole), and N-methyl-pyrrolindone.

The resulting resin was coated on to an aluminium panel and cured at 190°C to produce an homogenous coating of good flexibility.

Claims:

1. A method of making an imide precursor composition, which comprises:

(a) mixing at least one lactam and/or amino acid (component A) with at least one aromatic dianhydride (component B) in a mole ratio of A:B of up to 10:1,

(b) mixing a solvent with the mixture from step (a) and heating the resulting mixture, and

(c) mixing at least one diamine (component C) with the product of step (b) to give a solution of the imide precursor which forms a polyimide upon heating.

2. A method according to claim 1, in which component A is a lactam of the formula:

$$H_2C-(CH_2)_x-NHCO$$

where x is an integer of from 2 to 7.

3. A method according to claim 1, in which component A is 2-pyrrolidone, 2-piperidone, caprolactam, 4-aminobutyric acid, 5-aminovaleric acid, 6-aminocaproic acid, or a mixture of two or more thereof.

4. A method according to any of claims 1 to 3, in which component B is pyromellitic dianhydride and/or 3,3',4,4'-benzophenone tetracarboxylic acid dianhydride.

5. A method according to any of claims 1 to 4, in which the solvent is an alcohol, an N,N-dialkylcarboxyamide, a ketone, or a mixture of two or more thereof.

6. A method according to claim 5, in which the solvent is N,N-dimethylformamide.

7. A method according to any of claims 1 to 6, in which component C is 3,3'-diaminodiphenylmethane, 4,4'-diaminodiphenylmethane, m-phenylenediamine, p-phenylenediamine, 3,3'-diaminodiphenyl sulphone, 4,4'-diaminodiphenyl sulphone, 4,4'-diaminodiphenyl ether, or a mixture of two or more thereof.

8. A method according to any of claims 1 to 6, in which component C is 1,3-diaminopropane, 1,4-diaminobutane, 1,6-diaminohexane, 1,8-diaminooctane, 1,12-diaminododecane, or a mixture of two or more thereof.

9. A method according to any of claims 1 to 6, in which component C is at least 50 mol % aromatic.

10. A method according to any of claims 1 to 9, in which the solution of imide precursor has a solids content of from 10 to 60% by weight.

11. A method according to any of claims 1 to 10, which includes the additional step of drying the solution of imide precursor to a powder.

12. A method according to claim 11, which includes the further additional step of dissolving the dry powder in a solvent.

13. A method of forming a coating on the surface of a substrate, in which the imide precursor composition made by the method according to any of claims 1 to 12 is applied to the surface of a substrate and the coated

substrate is heated to form a smooth highly adherent coating.

14. A method of bonding together two surfaces, in which the imide precursor composition made by the method according to any of claims 1 to 12 is applied to at least one of the surfaces, the two surfaces are pressed together with moderate pressure, and the assembly is heated to bond together the two surfaces.